Europäisches Patentamt

(19) European Patent Office

Office européen des brevets

(11) Publication number: **0 104 719**
**B1**

# (12) EUROPEAN PATENT SPECIFICATION

(45) Date of publication of patent specification: **10.12.86**

(51) Int. Cl.⁴: **C 08 L 63/00, C 09 D 3/58**

(21) Application number: **83303961.3**

(22) Date of filing: **07.07.83**

(54) Epoxy powder coating compositions containing calcium oxide.

(30) Priority: **23.08.82 US 410795**

(43) Date of publication of application:
**04.04.84 Bulletin 84/14**

(45) Publication of the grant of the patent:
**10.12.86 Bulletin 86/50**

(84) Designated Contracting States:
**BE DE FR GB IT NL SE**

(56) References cited:
**DE-A-2 254 437**
**US-A-3 039 987**
**US-A-3 442 849**
**US-A-3 582 517**

**CHEMICAL ABSTRACTS, vol. 80, no. 20, May 20, 1974, page 39, abstract no. 109394j, COLUMBUS, Ohio (US)**

**CHEMICAL ABSTRACTS, vol. 96, 1982, page 93, abstract no. 8254p, COLUMBUS, Ohio (US)**

**CHEMICAL ABSTRACTS, vol. 88, 1978, page 106, abstract no. 172008s, COLUMBUS, Ohio (US)**

(73) Proprietor: **THE VALSPAR CORPORATION**
**1101 East Third Street, South**
**Minneapolis Minnesota 55415 (US)**

(72) Inventor: **LaRoche, Francis William**
**19 Van Dusen Boulevard**
**Toronto Ontario, M8Z 3E4 (CA)**

(74) Representative: **Jones, Alan John et al**
**CARPMAELS & RANSFORD**
**43 Bloomsbury Square**
**London, WC1A 2RA (GB)**

**Description**

This invention relates to epoxy powder coating compositions containing calcium oxide.

Epoxy powder coating compositions are well known and widely used. Examples of such compositions are described in U.S. Patents 4,122,060 and 4,322,456.

Calcium oxide has been used in various rubber and plastics compositions particularly to eliminate the porosity that develops during vulcanization of rubber, for example. It has also been proposed in US—A—3,039,987 to mix calcium oxide powder with epoxy powder to provide fluidisable coating blends which will effect uniform coating on sharp corners and edges.

According to the present invention, there are provided heat-curable epoxy powder coating compositions comprising epoxy resin and filler including calcium oxide, coated with a material which retards adsorption of water, in an amount sufficient to reduce foaming when the composition is heat cured. Substrates may be coated with such compositions by applying the composition to the substrate and fusing and curing the composition to a film.

The presence of calcium oxide in the coating assists in reducing foaming which occurs on heat-cure of known compositions not containing calcium.

The calcium oxide is treated with a hydrophobic material to reduce hydrolysis. Typical hydrophobic agents include wax and oil. Treated calcium oxide suitable for use in this invention is commercially available. The amount of calcium oxide that is included in the composition is the amount that is sufficient to reduce foaming of the particular epoxy composition. Generally, that amount is from 1 to 10% by weight of the total composition, preferably from 2 to 8% by weight; in certain applications, as little as 3% by weight has been found to be totally satisfactory.

An essential component of the compositions of the invention is a solid epoxy resin. In general, any solid epoxy resin is suitable. Particularly preferred are epoxy resins which are the condensation products of bisphenol-A and epichlorohydrin. Also suitable are epoxy novolac resins. One or more such epoxy resins can be used as well as epoxy resins of different chemical constitution.

Preferably, the compositions of the invention include resinous curing agents which are reactive with epoxy resins. Suitable materials of this type include novolac resins and, in particular, polyhydric phenols; suitable polyhydric phenols are described in U.S. Patent 4,322,456. Preferred polyhydric phenols include those materials described in U.S. Patent 4,322,456 prepared by reacting an excess of bisphenol with a diglycidyl ether of bisphenol in the presence of a suitable catalyst, and resins obtained by reacting a bisphenol with an epoxy novolac resin.

The compositions generally include catalysts in amounts from 0.001 to 10% and preferably from 0.05 to 5% by weight, based on the weight of the epoxy-containing compound and the curing agent.

Effective catalysts include phosphonium compounds and imidazoles as described in U.S. Patent 4,322,456, but any suitable catalyst can be used.

Pigments, fillers, dyes, flow control agents and other additives can be included in the compositions of the invention. Typical fillers (other than calcium oxide) are barium sulfate, calcium silicate, calcium meta silicate, and calcium carbonate. Calcium oxide can be used as the only filler or can be used in conjunction with other fillers.

The components of the composition are advantageously combined by melt blending, extruding the melt and pulverising to achieve a powder with a particle size predominantly less than 150 microns. Preferably, more than 90% and most preferably more than 96% of the particles are smaller than 150 microns.

Coatings are prepared from the compositions of the invention by applying the composition to a substrate and heating to effect curing. The substrate may be heated either before or after application of the powder coating composition. Typically in pipe coating applications for which the compositions of the invention are particularly suitable, the pipe is heated and the powder is applied to the heated pipe. Curing is conducted at temperatures sufficiently high to give reasonable cure times; generally these temperatures are from 130 to 300°C. The thickness of the applied coating depends largely on the ultimate use of the coated article; thicknesses are generally from 200 to 1000 microns and preferably from 300 to 500 microns.

The invention is illustated by the following Examples, in which all parts are by weight.

## EXAMPLE 1

This example illustrates a representative composition in accordance with the present invention.

The following materials, except the silica, are melt blended and extruded at a temperature of 90 to 100°C, pulverised into a powder (greater than 96% below 150 microns) and the silica is dry blended with the powder.

|  | CONTROL | EXAMPLE 1 |
|---|---|---|
| DER 664U, Epoxy Resin | 310.00 | 310.00 |
| DER 672U, Epoxy Resin | 320.00 | 320.00 |
| XD8062.01 Curing Agent | 138.00 | 138.00 |
| EPON P104 Curing Agent | 5.00 | 5.00 |
| BYK Powder Flow VP360P, Flow Additive | 2.00 | 2.00 |
| Pigments | 21.20 | 21.20 |
| Mica | 23.00 | 23.00 |
| Calcium Meta Silicate | 180.40 | 100.40 |
| CALOXOL CP2 |  | 80.00 |
| AEROSIL R972 Silica | 0.40 | 0.40 |
|  | 1000.00 | 1000.00 |

DER 664 U is a bisphenol-A epoxy resin having an epoxide equivalent weight of 875—975 available from Dow.

DER 672 U is a novolac-modified bisphenol-A epoxy resin having an epoxide equivalent weight of 750—850 available from Dow.

XD 8062.01 is a resinous phenolic curing agent containing 2-methyl imidozole available from Dow.

Epon P104 is a resinous epoxy curing agent of the accelerated dicyandiamide type available from Shell.

Byk Powder Flow VP 360P is a levelling agent from coatings comprising an acrylic polymer absorbed on silica available from Byk-Mallincrodt.

Caloxol CP2 is calcium oxide coated with mineral oil available from John and E. Sturge Ltd.

Aerosil R972 is silica having an average particle size of 20 millimicrons available from Degussa.

EXAMPLE 2

The composition of Example 1 containing calcium oxide was compared to the Control (without calcium oxide) by coating the compositions onto metal and evaluating the coatings.

Hot rolled steel was grit blasted, degreased and cleaned with acetone. The samples were preheated for 15—20 minutes at 274°C resulting in a 246°C metal temperature. The powders were coated to a film build of 300—400 microns and postcured for 5 minutes at 274°C.

The samples were evaluated for voids, impact, bend, hot water soak and cathodic disbondment and rated on a scale of 1 to 10 in which 10 is the best rating. Results are summarized in the Table below.

Void ratings were made by visual microscopic examination. Impact and bend tests were in accordance with ASTM methods. The hot water soak test was conducted by soaking the samples in water at 85°C for 4 weeks and evaluating the samples weekly for changes in film and adhesion. Cathodic disbondment (cell) was according to British Gas Specification CW6. Cathodic disbondment (tank) is an internal laboratory variation on the British Gas cell method in which multiple samples are tested at one time in a tank.

TABLE

|  | VOID | Impact | | Bend | | Hot Water Soak | Cathodic Disbandment | | TOTALS |
|---|---|---|---|---|---|---|---|---|---|
|  |  | R.T. | −40°C | R.T. | −40°C |  | TANK | CELL |  |
| CONTROL | 4.5 | 7.5 | 3 | 6.6 | 4.8 | 5.9 | 7.9 | 8.6 | 48.6 |
| EXAMPLE 1 | 9 | 10 | 5.5 | 9.6 | 6.6 | 6.4 | 6.5 | 7.6 | 61.2 |

It is evident that the sample coated with the composition of Example containing calcium oxide exhibited significantly better void and hot water soak ratings as well as an improved overall total rating.

**Claims**

1. A heat-curable epoxy powder coating composition comprising an epoxy resin and a filler including calcium oxide, coated with a material which retards adsorption of water, in an amount sufficient to reduce foaming when the composition is heat cured.

2. A composition according to claim 1, containing from 1 to 10% by weight of calcium oxide, based on the total composition.

3. A composition according to claim 2, containing from 2 to 8% by weight of calcium oxide, based on the total composition.

4. A composition according to any one of claims 1 to 3, in which the calcium oxide has been melt blended with the epoxy resin.

3

5. A composition according to any preceding claim in which the calcium oxide is coated with oil or wax.

6. A composition according to any one of claims 1 to 5, which includes a polyhydroxy curing agent.

7. A composition according to any one of claims 1 to 6, in which the epoxy resin is a bisphenol A-epichlorohydrin epoxy resin.

8. A method for coating a substrate comprising the steps of applying to the substrate a composition according to any one of claims 1 to 7, and fusing and curing the composition to a film on the substrate.

**Patentansprüche**

1. Wärmehärtende Epoxy-Pulver-Überzugszusammensetzung, die ein Epoxyharz und einen Füllstoff, der Calciumoxid einschließt, umfaßt, das mit einem Material, das die Adsorption von Wasser hemmt, in einer Menge überzogen ist, die ausreichend ist, um das Schäumen zu verhindern, wenn die Zusammensetzung wärmegehärtet wird.

2. Zusammensetzung nach Anspruch 1, die von 1 bis 10 Gew.-% Calciumoxid enthält, bezogen auf die gesamte Zusammensetzung.

3. Zusammensetzung nach Anspruch 2, die von 2 bis 8 Gew.-% Calciumoxid bezogen auf die gesamte Zusammensetzung enthält.

4. Zusammensetzung nach einem der Ansprüche 1 bis 3, worin das Calciumoxid mit dem Epoxyharz schmelzvermischt wurde.

5. Zusammensetzung nach einem der vorstehenden Ansprüche, worin das Calciumoxid mit Öl oder Wachs überzogen ist.

6. Zusammensetzung nach einem der Ansprüche 1 bis 5, die ein Polyhydroxy-Härtemittel umfaßt.

7. Zusammensetzung nach einem Ansprüche 1 bis 6, worin das Epoxyharz ein Bisphenol A-epichlorhydrin-Epoxy-harz ist.

8. Verfahren zum Überziehen eines Substrates, welches die Stufen umfaßt:
Auftragen einer Zusammensetzung nach einem der Ansprüche 1 bis 7 auf das Substrat, Schmelzen und Härten de Zusammensetzung zu einem Film auf dem Substrat.

**Revendications**

1. Une composition de revêtement à base de poudre époxy thermodurcissable comprenant une résine époxy et une charge contenant de l'oxyde de calcium, revêtue d'un matériau qui retarde l'adsorption d'eau employé en un quantité suffisante pour réduire le moussage lorsque la composition est durcie par la chaleur.

2. Une composition selon la revendication 1, contenant de 1 à 10% en poids d'oxyde de calcium par rapport au poids total de la composition.

3. Une composition selon la revendication 2, contenant de 2 à 8% en poids d'oxyde de calcium par rapport au poids total de la composition.

4. Une composition selon l'une quelconque des revendications 1 à 3, dans laquelle l'oxyde de calium est mélange à l'état fondu à la résine époxy.

5. Une composition selon l'une quelconque des revendications précédentes, dans laquelle l'oxyde de calcium est revêtu d'huile ou de cire.

6. Une composition selon l'une quelconque des revendications 1 à 5, comprenant un agent de durcissement polyhydroxylé.

7. Une composition selon l'une quelconque des revendications 1 à 6, dans laquelle la résine époxy est une résine époxy à base de bisphénol A et d'épichlorhydrine.

8. Une méthode de revêtement d'un substrat qui comprend les étapes d'application sur le substrat d'une composition selon l'une quelconque des revendications 1 à 7, puis de fusion et de durcissement de cette composition pour produire un film sur le substrat.